# EUROPÄISCHE PATENTSCHRIFT

(11) **EP 1 632 704 B1**
(45) Veröffentlichungstag und Bekanntmachung des Hinweises auf die Patenterteilung: **31.03.2010**
(21) Anmeldenummer: 05017574.4
(22) Anmeldetag: 12.08.2005
(51) Int. Cl.: F16L 9/12

(54) **Sanitärschlauch sowie Verfahren zur Herstellung eines Sanitärschlauches**
Sanitary hose and process to produce a sanitary hose
Tuyau souple sanitaire et procédé de fabrication d'un tuyau souple sanitaire

(30) Priorität: 06.09.2004 DE 102004043452
(43) Veröffentlichungstag der Anmeldung: 08.03.2006
(73) Patentinhaber: Neoperl GmbH, 79379 Müllheim (DE)
(72) Erfinder: Weis, Christoph, 79379 Müllheim (DE)
(74) Vertreter: Maucher, Wolfgang

(56) Entgegenhaltungen:
- EP-B1- 0 685 676
- WO-A-2004/027304
- DE-C1- 19 953 737

## Beschreibung

Die Erfindung betrifft einen Sanitärschlauch, der auf seiner Außenseite wenigstens bereichsweise mit einer zumindest teilweise nach außen sichtbaren Heißprägefolie verbunden ist, die als Träger einer Farbe und/oder Metallisierung ausgestaltet ist, wobei der Sanitärschlauch zumindest eine steife und druckfeste Schlauchlage aus Kunststoff hat.

Die Erfindung befasst sich auch mit einem Verfahren zur Herstellung eines Sanitärschlauches, bei dem eine Schlauchlage aus einem Kunststoffmaterial extrudiert wird, wobei diese Schlauchlage in einem nachfolgenden Verfahrensschritt außenseitig mit mindestens einer Heißprägefolie belegt und die Heißprägefolie durch Wärme- und Druckanwendung vollflächig und fest mit der Außenseite des Sanitärschlauches verbunden wird.

Aus der EP 0 685 676 B1 ist bereits ein Sanitärschlauch mit einer eingefärbten und/oder metallisieren Oberfläche bekannt, der als Träger für die Farbe und/oder Metallisierung mindestens eine Heißprägefolie aufweist. Diese Heißprägefolie ist mit einer mindestens teilweise nach außen sichtbaren Außenseite eines vorgefertigten Schlauches verbunden. Der vorgefertigte Schlauch und die ihn bedeckende Schlauchlage können von einer weiteren Schlauchlage umhüllt sein, die aus einem durchsichtigen und/oder durchscheinenden Kunststoffmaterial hergestellt und aufextrudiert ist.

Der aus EP 0 685 676 B1 vorbekannte Schlauch weist biegsame und teils auch vergleichsweise dünnwandige Schlauchlagen auf. Der vorbekannte Schlauch ist daher als flexibler Brauseschlauch vorgesehen.

Im Sanitärbereich werden die Armaturenanschlüsse einer Sanitärarmatur bislang über verchromte Kupferleitungen mit dem Eckventil verbunden. Dazu sind die starren Kupferleitungen derart zu verformen und zu biegen, dass das eine Leitungsende am Eckventil und das andere Leitungsende am Armaturenanschluss befestigt werden kann. Das Ablängen, Verformen und Anschließen dieser Kupferleitungen insbesondere am Einsatzort ist kompliziert und aufwendig. Beim Ablängen oder Absägen der vorbekannten Kupferrohre an den Rohrenden des benötigten Rohrabschnittes besteht darüber hinaus die Gefahr, dass sich scharfe Grate bilden, die zu einem Einschneiden und einer Beschädigung der in den Anschlussfittings vorgesehenen O-Ringe oder dergleichen Dichtungen und somit letztlich zu Undichtigkeiten der Rohrleitung führen können. Ein Entgraten der abgelängten Rohrabschnitte und ein Verlöten der an den Rohrenden benötigten Anschlussfittings ist mit einem zusätzlichen Zeit- und Arbeitsaufwand verbunden. Darüber hinaus besteht beim Verlöten die Gefahr eines unerwünschten Verzugs.

Es besteht daher insbesondere die Aufgabe, einen Sanitärschlauch der eingangs erwähnten Art zu schaffen, mit der eine ansprechende Verbindung beispielsweise zwischen Eckventil und Armaturenanschluss hergestellt werden kann, deren Montage aber dennoch nur mit einem vergleichsweise geringen Aufwand verbunden ist.

Die erfindungsgemäße Lösung dieser Aufgabe besteht bei dem Sanitärschlauch der eingangs erwähnten Art insbesondere darin, dass der Sanitärschlauch zumindest eine Schlauchlage aus vernetztem Kunststoff aufweist.

Der erfindungsgemäße Sanitärschlauch weist zumindest eine steife und druckfeste Schlauchlage aus vernetztem Kunststoff auf. Da der erfindungsgemäße Sanitärschlauch eine Schlauchlage aus vernetztem Kunststoff hat, die steif und gleichzeitig verformbar auszugestalten ist, steht die Steifigkeit dieser Schlauchlage einem manuellen Verformen des erfindungsgemäßen Sanitärschlauches nicht entgegen. Zwar ist es möglich, einen Sanitärschlauch lediglich unter Verwendung einer unbeschichteten, d.h. keinerlei zusätzliche Farbe oder Metallisierung tragenden, steifen und druckfesten Schlauchlage aus Kunststoff herzustellen. Einen solchen Kunststoffschlauch ist aber das verwendete und von üblichen, als besonders haltbar geschätzten Kupferrohren abweichende Kunststoffmaterial bereits aus der Distanz anzusehen. Der erfindungsgemäße Sanitärschlauch weist demgegenüber nicht nur zumindest eine steife und druckfeste Schlauchlage auf, - vielmehr ist diese außenseitig mit einer zusätzlichen Heißprägefolie verbunden, die als Träger einer Farbe und/oder Metallisierung ausgestaltet ist. In montiertem Zustand gibt die Steifigkeit der zumindest einen Schlauchlage und die von außen sichtbare Heißprägefolie dem erfindungsgemäßen Sanitärschlauch ein mit herkömmlichen Kupferleitungen vergleichbares Erscheinungsbild. Im Vergleich zu herkömmlichen Kupferleitungen lässt sich der erfindungsgemäße Sanitärschlauch jedoch wesentlich leichter verformen, wodurch der Montageaufwand erheblich reduziert wird. Das mit herkömmlichen Kupferleitungen vergleichbare Erscheinungsbild wird durch die Farbe und insbesondere die Metallisierung noch zusätzlich begünstigt, die die zumindest teilweise nach außen sichtbare Heißprägefolie trägt.

Darüber hinaus können die erforderlichen Anschlussfittings an der aus Kunststoff bestehenden, zumindest einen Schlauchlage des erfindungsgemäßen Sanitärschlauches allein durch Verpressen und somit kalt, umweltfreundlich, ohne unerwünschten Verzug, rasch und mit geringem Aufwand befestigt werden. Bei einem von herkömmlichen Kupferleitungen nicht unterscheidbaren äußeren Erscheinungsbild ist der erfindungsgemäße Sanitärschlauch wesentlich leichter und somit kostengünstiger zu montieren. Soweit herkömmliche Sanitärarmaturen zur Vermeidung von Undichtigkeiten mit einem bereits angelöteten Kupferrohr-Abschnitt ausgeliefert wurden, kann diesen Sanitärarmaturen nun stattdessen ein erfindungsgemäßer Sanitärschlauch separat beigefügt werden, wodurch das Verpacken derartiger Sanitärarmaturen und somit die Lagerhaltung sowie der Transport wesentlich vereinfacht werden können. Zudem lässt sich der erfindungsgemäße Sanitärschlauch mit geringem Aufwand auch beschriften oder bedrucken oder mit einer beschrifteten oder bedruckten Heißprägefolie versehen.

Unter einer Heißprägefolie wird eine dünne Kleberschicht verstanden, die eine Metallisierung oder Einfärbung trägt und die unter Wärme- und Druckeinwirkung auf eine Oberfläche aufgebracht werden kann. Es versteht sich, dass die auf die Heißprägefolie aufgebrachte Farbe auch weiß und/oder schwarz oder andersfarbig sein kann.

Zwar sind solche Heißprägefolien häufig mit einem Schutzlack überzogen, der jedoch ebenfalls sehr dünn ist und daher nur eine begrenzte Schutzfunktion entfalten kann. Eine besonders vorteilhafte Ausführungsform gemäß der Erfindung sieht daher vor, dass der Schlauch mehrlagig ausgebildet ist und dass dazu die mit der Heißprägefolie verbundene Schlauchlage sowie die Heißprägefolie von zumindest einer Schlauchlage aus durchsichtigem und/oder durchscheinendem Material umhüllt ist. Eine solch zusätzliche, umhüllende Schlauchlage bietet insbesondere der dadurch umhüllten Heißprägefolie nicht nur einen mechanischen Schutz, sondern kann darüber hinaus auch die Funktion einer Oxidationssperrschicht übernehmen, die primär einer Oxidation der dünnen Chrom- oder dergleichen Metallschicht der verwendeten Heißprägefolie entgegenwirkt.

Eine bevorzugte Ausführungsform gemäß der Erfindung sieht vor, dass der Schlauch zumindest eine Schlauchlage aus einem vernetzten Thermoplast, insbesondere aus PEX, hat.

Unter einer Vernetzung wird die Einwirkung auf den verwendeten Kunststoff mittels bestimmter Medien, beispielsweise energiereicher Strahlung, verstanden, welche die ursprünglich eher physikalische Verknüpfung der Kunststoffmoleküle, zumindest partiell, zu einer dauerhaften chemischen Verbindung werden lässt, wodurch das verwendete Kunststoffmaterial härter und mechanisch belastbarer wird.

Besonders vorteilhaft ist es, wenn zumindest die mit der Heißprägefolie verbundene Schlauchlage aus PEX oder dergleichen vernetztem Thermoplast hergestellt ist.

Zusätzlich oder stattdessen kann auch die Schlauchlage, welche die mit der Heißprägefolie umhüllte Schlauchlage sowie die Heißprägefolie selbst umhüllt, aus einem vernetzten Thermoplast und insbesondere aus PEX bestehen. Zwar ist es möglich, diese umhüllende Schlauchlage auch aus Polyethylen, Polystyrol oder dergleichen Thermoplast herzustellen. Ist diese umhüllende Schlauchlage jedoch aus einem vernetzten Kunststoff und insbesondere aus transparentem PEX hergestellt, bildet diese Schlauchlage eine dünne, aber dennoch harte und belastbare Umhüllung.

Eine bevorzugte Ausführungsform gemäß der Erfindung sieht vor, dass der Sanitärschlauch als Verbindungsschlauch zwischen Eckventil und Armaturenanschluss ausgebildet ist.

Besonders vorteilhaft ist es, wenn zumindest der an einem Schlauchende des Sanitärschlauches vorgesehene Anschlussfitting oder dergleichen Rohrleitungsanschluss mit den Schlauchlagen verpresst oder vercrimpt ist. Ist der Rohrleitungsanschluss mit den Schlauchlagen des erfindungsgemäßen Sanitärschlauches verpresst oder vercrimpt, kann auf zusätzliche O-Ringe oder dergleichen Dichtungen im Rohrleitungsanschluss auch verzichtet werden.

Zur Herstellung des eingangs erwähnten Sanitärschlauches ist erfindungsgemäß vorgesehen, dass zumindest eine, aus einem vernetzbaren Kunststoff bestehende Schlauchlage nach dem Extrudieren einer Vernetzung unterzogen wird. Ein solcher Sanitärschlauch, der zumindest eine aus vernetztem Kunststoff bestehende Schlauchlage hat, ist vergleichsweise steif und dennoch ausreichend biegsam, um eine im Erscheinungsbild mit herkömmlichen Kupferleitungen vergleichbare Verbindungsleitung zu bilden.

Dabei wird die Herstellung noch zusätzlich wesentlich vereinfacht, wenn der Sanitärschlauch im einem Koextrusionsverfahren mehrlagig hergestellt wird und wenn auf die mit zumindest einer Heißprägefolie belegte Schlauchlage sowie die Heißprägefolie eine umhüllende Schlauchlage aus einem durchsichtigen und/oder durchscheinenden Kunststoffmaterial aufextrudiert wird. Bei dieser weiterbildenden Verfahrensweise lässt sich ein zumindest dreilagiger Aufbau eines Sanitärschlauches in einem Koextrusionsverfahren erzielen. Dieser dreilagige Aufbau kann im Koextrusionsverfahren in einem Anlagenstrang hintereinander hergestellt werden und braucht nicht getrennt voneinander zu erfolgen. Der Aufbau wäre: Extruder für Trägermaterial, Vernetzungsstation, Vorrichtung zum Aufbringen der Chrom- oder dergleichen Heißprägefolie, Extruder zum Aufbringen der transparenten dünnen Schutzschicht, gegebenenfalls mit nachgeschalteter Vernetzung. Da die empfindliche Chrom- oder dergleichen Heißprägefolie sofort nach dem Aufbringen durch die aufextrudierte Schutzschicht geschützt ist, kann das fertige Produkt auf einfache Weise aufgetrommelt werden. Im erfindungsgemäßen Herstellungsverfahren ist ein Sanitärschlauch in einer Fertigungsstrasse herstellbar, wobei jedoch ohne größere Umstände verschiedene Durchmesser, beispielsweise für den Armaturenanschluss-Bereich Nennweiten von 6 oder 8 mm, zu erzeugen sind.

Besonders vorteilhaft ist es, wenn zumindest die mit wenigstens einer Heißprägefolie belegte Schlauchlage aus einem vernetzten Kunststoff hergestellt wird. Zusätzlich oder stattdessen kann auch die Schlauchlage, welche die der Heißprägefolie belegte Schlauchlage sowie die Heißprägefolie selbst umhüllt, aus einem vernetzten Kunststoff hergestellt werden.

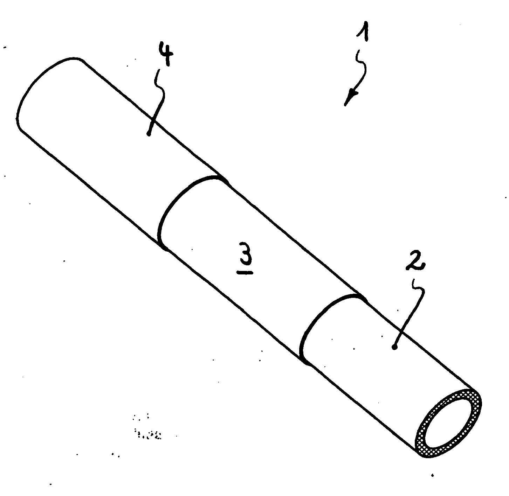

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

In der einzigen Figur ist der Abschnitt eines Sanitärschlauches 1 dargestellt, welcher Sanitärschlauch 1 als verbindungsleitung insbesondere zwischen einem Eckventil und einem Armaturenanschluss vorgesehen ist.

Der Sanitärschlauch 1 weist eine innere Schlauchlage 2 aus Kunststoff auf, die steif und druckfest, aber dennoch biegsam ausgestaltet ist. Die druckfeste und temperaturbeständige Schlauchlage 2 ist dazu aus einem vernetzten Thermoplast, vorzugsweise aus PEX, hergestellt.

Der Sanitärschlauch 1 ist auf seiner Außenseite wenigstens bereichsweise und vorzugsweise vollflächig mit einer zumindest teilweise nach außen sichtbaren Heißprägefolie 3 belegt, die als Träger einer Farbe und/oder Metallisierung, vorzugsweise einer Chromschicht, ausgestaltet ist.

Die Steifigkeit der Schlauchlage 2 und die mit der Schlauchlage 2 verbundene Heißprägefolie 3 geben dem Sanitärschlauch 1 ein mit herkömmlichen Kupferleitungen vollkommen vergleichbares Erscheinungsbild. Dabei ist der Sanitärschlauch 1 jedoch wesentlich einfacher in die zum Anschluss von Eckventil und Sanitärarmatur erforderliche Form zu bringen, wodurch der Montageaufwand im Vergleich zu vorbekannten Kupferleitungen wesentlich reduziert wird.

Die Heißprägefolie 3 besteht aus einer hier nicht weiter dargestellten Kleberschicht, welche die Farbe oder Metallisierung trägt. Da die Farbe oder Metallisierung der Heißprägefolie 3 sehr dünn ist, kann auf die Heißprägefolie 3 noch ein Schutzlack aufgetragen sein.

Der hier dargestellte Sanitärschlauch 1 ist mehrlagig ausgebildet. Dazu ist die mit der Heißprägefolie 3 belegte Schlauchlage 2 sowie die Heißprägefolie 3 von zumindest einer Schlauchlage 4 aus durchsichtigem und/oder durchscheinendem Material umhüllt. Diese transparente Schlauchlage 4 hat nicht nur eine mechanische Schutzfunktion für die darunter liegende empfindliche Heißprägefolie 3, vielmehr schützt sie diese Heißprägefolie 3 und die darauf befindliche Chromschicht auch gegen eine unerwünschte Oxidation.

Die als schützende Umhüllung dienende Schlauchlage 4 kann aus Thermoplasten, wie beispielsweise PVC, Polystyrol, Polymethylen oder einem thermoplastischen Elastomer bestehen. Vorzugsweise aber ist diese umhüllende Schlauchlage 4 ebenfalls aus einem vernetzten Thermoplast, insbesondere aus PEX, hergestellt und bildet somit eine dünne, aber dennoch harte und belastbare Ummantelung.

Insbesondere wenn auch die harte, aber dünne Schlauchlage 4 aus sehr dünnem transparentem PEX hergestellt ist, kann beispielsweise auf den Einsatz von ökologisch bedenklichem PVC-Material verzichtet werden. Die dünne, aber harte Umhüllung 4 hat darüber hinaus den Vorteil, dass die mit der Heißprägefolie beispielsweise erzielte Chromoptik nicht negativ beeinflusst wird, so dass der Sanitärschlauch 1 praktisch nicht von einem herkömmlichen verchromten Kupferrohr zu unterscheiden ist. Darüber hinaus bietet eine harte Schlauchlage 4 den Vorteil, dass die bei den üblicherweise eingesetzten Rohr-Kupplungs- und Befestigungs-Systemen, wie Sperrzähnen oder Quetschverbindungen (direktes Verquetschen mit metallischen Verbindungselementen oder Verpressen mittels Hilfskörpern, die sich durch axiale Betätigung radial ausdehnen und das Rohr einklemmen), einen besseren Halt bietet. Weiche Oberflächen können dies nicht oder nicht in diesem Maße leisten, da dort die Gefahr des Wegkriechens und damit des Undichtwerdens oder Lösens der Verbindung besteht.

Auch sind mit Sperrzähnen ausgestattete Kupplungs- und Befestigungssysteme bei verchromten Kupferrohren nicht einsetzbar, da die Chromschicht für derartige Sperrzähne regelmäßig zu hart ist. Mit solchen Nachteilen hat der hier dargestellte Sanitärschlauch 1 demgegenüber nicht zu kämpfen, vielmehr können derartige Kupplungs- und Befestigungssysteme auch im Bereich der verchromten Heißprägefolie 3 des Sanitärschlauches 1 verwendet werden.

Der aus den Schlauchlagen 2, 4 und der Heißprägefolie 3 bestehende dreilagige Aufbau des Sanitärschlauches 1 kann in einem Koextrusionsverfahren in einem Anlagenstrang hintereinander hergestellt werden und braucht nicht getrennt voneinander zu erfolgen. Dabei könnte der Anlagenstrang beispielsweise folgende Stationen aufweisen: Extruder für die als Trägermaterial dienende Schlauchlage 2, Vernetzungsstation, Vorrichtung zum Aufbringen der Heißprägefolie 3, Extruder zum Aufbringen der transparenten dünnen und als Schutzschicht dienenden Schlauchlage 4, gegebenenfalls mit nachgeschalteter Vernetzungsstation. Da die Heißprägefolie 3 in einem solchen Anlagestrang sofort nach dem Aufbringen durch die aufextrudierte Schlauchlage 4 geschützt wird, kann das fertige Produkt anschließend ohne weiteres aufgetrommelt werden. Die Schlauchleitung 1 kann in einem solchen Anlagestrang mit vergleichsweise geringem Aufwand hergestellt werden, wobei sich ohne größere Umstände auch verschiedene Durchmesser, beispielsweise im Armaturenanschluss-Bereich mit Nennweiten von 6 oder 8 mm, erzeugen lassen.

## Patentansprüche

1. Sanitärschlauch (1), der auf seiner Außenseite wenigstens bereichsweise mit einer zumindest teilweise nach außen sichtbaren Heißprägefolie (3) verbunden ist, die als Träger einer Farbe und/oder Metallisierung ausgestaltet ist, wobei der Sanitärschlauch (1) zumindest eine steife und druckfeste Schlauchlage (2) aus Kunststoff hat, **dadurch gekennzeichnet, dass** der Sanitärschlauch (1) zumindest eine Schlauchlage aus vernetztem Kunststoff aufweist.

2. Sanitärschlauch nach Anspruch 1, **dadurch gekennzeichnet, dass** der Sanitärschlauch (1) mehrlagig ausgebildet ist und dass dazu die mit der Heißprägefolie (3) verbundene Schlauchlage (2) sowie die Heißprägefolie (3) von zumindest einer Schlauchlage (4) aus durchsichtigem und/oder durchscheinendem Material umhüllt ist.

3. Sanitärschlauch nach Anspruch 1 oder 2, **dadurch gekennzeichnet, dass** der Sanitärschlauch (1) zumindest eine Schlauchlage aus einem vernetzten Thermoplast, insbesondere aus PEX, hat.

4. Sanitärschlauch nach einem der Ansprüche 1 bis 3, **dadurch gekennzeichnet, dass** zumindest die mit der Heißprägefolie verbundene Schlauchlage (2) aus einem vernetzten Thermoplast und insbesondere aus PEXhergestellt ist.

5. Sanitärschlauch nach einem der Ansprüche 1 bis 4, **dadurch gekennzeichnet, dass** der Sanitärschlauch (1) als Verbindungsschlauch zwischen Eckventil und Armaturenanschluss ausgebildet ist.

6. Sanitärschlauch nach einem der Ansprüche 1 bis 5, **dadurch gekennzeichnet, dass** zumindest der an einem Schlauchende des Sanitärschlauches (1) vorgesehene Anschlussfitting oder dergleichen Rohrleitungsanschluss mit den Schlauchlagen (2,4) verpresst oder vercrimpt ist.

7. Verfahren zur Herstellung eines Sanitärschlauches (1) nach einem der vorhergehenden Ansprüche, bei dem eine Schlauchlage (2) aus einem Kunststoffmaterial extrudiert wird, wobei diese Schlauchlage (2) in einem nachfolgenden Verfahrensschritt außenseitig mit mindestens einer Heißprägefolie (3) belegt und die Heißprägefolie (3) durch Wärme- und Druckanwendung vollflächig und fest mit der Außenseite des Sanitärschlauches verbunden wird, **dadurch gekennzeichnet, dass** zumindest eine, aus einem vernetzbaren Kunststoff bestehende Schlauchlage (2) nach dem Extrudieren einer Vernetzung unterzogen wird.

8. Verfahren nach Anspruch 7, **dadurch gekennzeichnet, dass** der Sanitärschlauch (1) in einem Koextrusionsverfahren mehrlagig hergestellt wird und dass auf die mit zumindest einer Heißprägefolie (3) belegte Schlauchlage (2) sowie die Heißprägefolie (3) eine umhüllende Schlauchlage (4) aus einem durchsichtigen und/oder durchscheinenden Kunststoffmaterial aufextrudiert wird.

9. Verfahren nach Anspruch 8, **dadurch gekennzeichnet, dass** zumindest die mit wenigstens einer Heißprägefolie (3) belegte Schlauchlage (4) aus einem vernetzten Kunststoff hergestellt wird.

## Claims

1. Sanitary hose (1) which is connected on its outside at least in parts to a hot-stamped film (3) which is at least partly visible to the outside, which is constructed as a carrier for a coloured and/or metallised finish, the sanitary hose (1) having at least one rigid, pressure-resistant hose layer (2), **characterised in that** the sanitary hose (1) has at least one hose layer of cross-linked plastics.

2. Sanitary hose according to claim 1, **characterised in that** the sanitary hose (1) is of multi-layered construction and **in that**, for this purpose, the hose layer (2) attached to the hot-stamped film (3) as well as the hot-stamped film (3) are enveloped by at least one hose layer (4) of transparent and/or translucent material.

3. Sanitary hose according to claim 1 or 2, **characterised in that** the sanitary hose (1) has at least one hose layer of a cross-linked thermoplastic, particularly PEX.

4. Sanitary hose according to one of claims 1 to 3, **characterised in that** at least the hose layer (2) attached to the hot-stamped film is made of a cross-linked thermoplastic and in particular PEX.

5. Sanitary hose according to one of claims 1 to 4, **characterised in that** the sanitary hose (1) is constructed as a connecting hose between a corner valve and a pipe fitting connector.

6. Sanitary hose according to one of claims 1 to 5, **characterised in that** at least the connector fitting or similar pipe connector provided at one end of the sanitary hose is attached to the hose layers (2, 4) by compression or crimping.

7. Process for producing a sanitary hose (1) according to one of the preceding claims, wherein a hose layer (2) is extruded from a plastics material, this hose layer (2) being covered on the outside with at least one hot-stamped film (3) in a subsequent step and the hot-stamped film (3) being firmly attached over its entire surface to the outside of the sanitary hose by the application of heat and pressure, **characterised in that** at least one hose layer (2) consisting of a cross-linkable plastics is subjected to cross-linking after the extrusion.

8. Process according to claim 7, **characterised in that** the sanitary hose (1) is produced In a number of layers in a co-extrusion process and **in that** an enveloping hose layer (4) consisting of a transparent and/or translucent plastics material is extruded onto the hose layer (2) that is covered with at least one hot-stamped film (3) as well as onto the hot-stamped film (3).

9. Process according to claim 8, **characterised in that** at least the hose layer (4) covered with at least one hot-stamped film (3) is made from a cross-linked plastics material.

## Revendications

1. Tuyau souple sanitaire (1) relié sur sa face extérieure, au moins par zones, à un film (3) plaqué à chaud qui est au moins partiellement visible vers l'extérieur et se présente comme un substrat destiné à une peinture et/ou à une métallisation, ledit tuyau souple sanitaire (1) comportant au moins une couche (2) d'un boyau en matière plastique, rigide et résistante à la pression, **caractérisé par le fait que** ledit tuyau souple sanitaire (1) est muni d'au moins une couche d'un boyau en une matière plastique réticulée.

2. Tuyau souple sanitaire selon la revendication 1, **caractérisé par le fait que** ledit tuyau souple sanitaire (1) est de réalisation à plusieurs couches ; et **par le fait que**, à cette fin, la couche de boyau (2) reliée au film (3) plaqué à chaud, ainsi que ledit film (3) plaqué à chaud, sont enrobés d'au moins une couche (4) d'un boyau en un matériau transparent et/ou translucide.

3. Tuyau souple sanitaire selon la revendication 1 ou 2, **caractérisé par le fait que** ledit tuyau souple sanitaire (1) comprend au moins une couche d'un boyau en une matière thermoplastique réticulée, notamment en PEX.

4. Tuyau souple sanitaire selon l'une des revendications 1 à 3, **caractérisé par le fait qu'**au moins la couche de boyau (2), reliée au film plaqué à chaud, est fabriquée en une matière thermoplastique réticulée et, notamment, en PEX.

5. Tuyau souple sanitaire selon l'une des revendications 1 à 4, **caractérisé par le fait que** ledit tuyau souple sanitaire (1) est réalisé sous la forme d'un flexible de jonction entre une soupape d'équerre et un raccord de robinetterie.

6. Tuyau souple sanitaire selon l'une des revendications 1 à 5, **caractérisé par le fait qu'**au moins le nipple de raccordement ou le raccord similaire pour canalisations tubulaires, prévu à une extrémité dudit tuyau souple sanitaire (1), est solidarisé avec les couches de boyaux (2, 4) par compression ou par sertissage.

7. Procédé de fabrication d'un tuyau souple sanitaire (1) selon l'une des revendications précédentes, dans lequel une couche (2) d'un boyau en une matière plastique est soumise à extrusion, cette couche de boyau (2) étant extérieurement garnie d'au moins un film (3) plaqué à chaud, lors d'une étape opératoire suivante, et ledit film (3) plaqué à chaud étant relié à la face extérieure dudit tuyau souple sanitaire, rigidement et sur toute la superficie, par application de chaleur et de pression, **caractérisé par le fait qu'**au moins une couche de boyau (2), constituée d'une matière plastique réticulable, est soumise à une réticulation à l'issue de l'extrusion.

8. Procédé selon la revendication 7, **caractérisé par le fait que** le tuyau souple sanitaire (1) est produit en plusieurs couches, par un procédé de coextrusion ; et **par le fait qu'**une couche enveloppante (4) d'un boyau en une matière plastique transparente et/ou translucide est rapportée, par extrusion, sur la couche de boyau (2) garnie d'au moins un film (3) plaqué à chaud, ainsi que sur ledit film (3) plaqué à chaud.

9. Procédé selon la revendication 8, **caractérisé par le fait qu'**au moins la couche de boyau (4), garnie d'au moins un film (3) plaqué à chaud, est fabriquée en une matière plastique réticulée.
